Europäisches Patentamt

(19) European Patent Office

Office européen des brevets

(11) Publication number : **0 479 545 A1**

(12) # EUROPEAN PATENT APPLICATION

(21) Application number : **91308967.8**

(22) Date of filing : **01.10.91**

(51) Int. Cl.⁵ : **C08L 77/00, // (C08L77/00, 51:04, 51:06, 53:00, 53:02)**

(30) Priority : **05.10.90 US 593048**

(43) Date of publication of application :
**08.04.92 Bulletin 92/15**

(84) Designated Contracting States :
**AT BE CH DE DK ES FR GB GR IT LI LU NL SE**

(71) Applicant : **NOVACOR CHEMICALS
(INTERNATIONAL) S.A.
Fribourg (Canton of Fribourg) (CH)**

(72) Inventor : **Lo, Lawrence Yun-Shin
61 Dexter Road
Lexington, Massachusetts, 02173 (US)**
Inventor : **Feinberg-Kessel, Cynthia Beth
55 Hancock Hill Drive
Worcester, Massachusetts, 01609 (US)**

(74) Representative : **Jukes, Herbert Lewis et al
Swann, Elt & Company 31 Beaumont Street
Oxford OX1 2NP (GB)**

(54) **High impact nylon alloys.**

(57)   A super tough nylon blend comprises a nylon phase and a rubbery phase comprising a core/shell carboxylated acrylate, a block copolymer of styrene-butadiene-styrene and less than 20% of the rubber phase of a maleated block copolymer of styrene-butadiene-styrene. The blend has a good balance of physical properties including toughness and strength.

EP 0 479 545 A1

Jouve, 18, rue Saint-Denis, 75001 PARIS

The present invention relates to polymer alloys. More particularly the present invention relates to alloys or polyamides which alloys have good physical properties including toughness.

It is known to improve the toughness and in particular the impact resistance of polyamides by blending them with other polymers.

British Patent 998,439 published July 14, 1965 in the name of Du Pont discloses that nylon may be toughened by incorporating therein from 1 to 50 weight % of a polyolefin having a particle size less than 5 microns. The polyolefins disclosed in the patent are alpha olefins such as ethylene, EP or EPDM polymers. The polymers are functionalized. That is they contain the residue of an ethylenically unsaturated copolymerizable carboxylic acid. The patent does not suggest that acrylate type polymers might be used to modify the impact properties of nylons.

United States Patent 3,668,274 issued June 6, 1972 to Rohm and Haas Company (Owens) discloses modifying nylon with core/shell acrylate polymers. Such core/shell polymers are generally known to be produced by the sequential polymerization of a second monomer charge in the presence of a first essentially polymerized charge. In the Owens patent a crosslinking agent is used to graft the second phase to the first phase. The Owens patent does not contemplate the use of other types of polymers such as the hydrogenated styrene-butadiene block polymers used in accordance with the present invention.

United States Patent 4,174,358 issued November 13, 1979 to Du Pont (Epstein) discloses modifying nylon with a host of one or more polymers. Generally the polymers are alpha olefins or vinyl type polymers which contain one or more reactive groups such as anhydrides of ethylenically unsaturated dicarboxylic acids. According to the patent the discontinuous phase of the polymer containing the residue of a reactive monomer in the polymer alloy must have a particle size distribution from 0.1 to 3, preferably from 0.1 to 1 microns. This patent appears to cover nylon modified with maleated EPDM. Additionally the patent teaches that the approach taught by Owens does not result in improvements equal to those obtained by the Epstein patent. Furthermore Epstein teaches that to obtain the improvements in accordance with his patent, it is essential that the polymers containing the residue of the reactive monomer be present in the discontinuous phase in an amount of not less than 20%.

In view of Epstein it would not be expected that the toughness of nylon could be further improved by using a combination of polymers of the type taught by Owens, less than 20% of an "Epstein" polymer and a polymer which is neither disclosed by Epstein nor Owens.

The rubber content in an alloy influences both toughness and stiffness. High impact alloys have relatively low stiffness which in some circumstances is not desirable. The present invention seeks to provide a range of alloys from high toughness and relatively lower stiffness to medium toughness and relatively higher stiffness.

The present invention provides a polymer alloy characterised by comprising:

A) from 65 to 95 weight % of one or more polyamides;

B) from 1 to 25 weight % of one or more graft copolymers comprising from 50 to 99 weight % of a rubbery substrate comprising:

i) 50-99.5 weight % of one or more monomers selected from $C_{4-12}$ alkyl or hydroxy alkyl acrylates and $C_{4-6}$ conjugated diolefins;

ii) from 0-40 weight % of one or more $C_{8-12}$ vinyl aromatic monomers which are unsubstituted or substituted by a $C_{1-4}$ alkyl radical; and

iii) from 0.5 to 10 weight % of one or more allyl or glycidyl esters of $C_{3-6}$ ethylenically unsaturated carboxylic acids or anhydrides;

said substrate having grafted thereto from 1 to 50 weight % of a co- or homopolymer comprising:

i) from 59.5 to 90 weight % of one or more monomers selected from $C_{1-4}$ alkyl methacrylates, $C_{8-12}$ vinyl aromatic monomers which are unsubstituted or substituted by a $C_{1-4}$ alkyl radical, and $C_{3-6}$ alkenyl nitriles;

ii) from 0 to 30 weight % of one or more $C_{4-12}$ alkyl acrylates; and

iii) from 0.5 to 10 weight % of one or more $C_{3-6}$ ethylenically unsaturated carboxylic acids;

C) from 1 to 25 weight % of one or more polymers selected from

i) block copolymer comprising from 90 to 60 weight % of one or more $C_{4-6}$ conjugated diolefins and from 10 to 40 weight % of one or more $C_{8-12}$ vinyl aromatic monomers which are unsubstituted or substituted by a $C_{1-4}$ alkyl radical, which block copolymer has been hydrogenated to at least 90%;

ii) polymers comprising 40 to 80 weight % of ethylene, 20 to 60 weight % of at least one $\alpha$-$C_{3-8}$ olefin and from 0 to 15 weight % of a non-conjugated $C_{6-12}$ diene; and

iii) polymers comprising from 20 to 80 weight % of one or more $C_{8-12}$ vinyl aromatic monomers which are unsubstituted or substituted by a chlorine atom or a $C_{1-4}$ alkyl radical and from 80 to 20 weight % of one or more $C_{4-6}$ conjugated diolefins;

iv) copolymers of one or more $C_{4-8}$ alkyl or hydroxy alkyl esters of $C_{3-6}$ ethylenically unsaturated carboxylic acids (e.g. of acrylic or methacrylic acid) which esters form homopolymers having a Tg of less than -20°C; and

D) from 1 to 7 weight % of one or more polymers selected from

i) a block copolymer comprising from 89.5 to 55 weight % of one or more $C_{4-6}$ conjugated diolefins, from 10 to 40 weight % of one or more $C_{3-12}$ vinyl aromatic monomers which are unsubstituted or substituted by a $C_{1-4}$ alkyl radical, and from 0.5 to 5 weight % of one or more monomers selected from $C_{3-8}$ ethylenically unsaturated carboxylic acids, anhydrides of $C_{4-8}$ ethylenically unsaturated dicarboxylic acids, imides of $C_{4-8}$ ethylenically unsaturated dicarboxylic acids, and $C_{4-8}$ ethylenically unsaturated epoxides, which block copolymer has been hydrogenated to at least 90%;

ii) polymers comprising 40 to 80 weight % of ethylene, 40 to 80 weight % of at least one $\alpha$-$C_{3-8}$ olefin, from 0 to 15 weight % of a non-conjugated $C_{6-12}$ diene, and from 0.5 to 5 weight % of one or more monomers selected from $C_{3-8}$ ethylenically unsaturated carboxylic acids, anhydrides of $C_{4-8}$ ethylenically unsaturated dicarboxylic acids, imides of $C_{4-8}$ ethylenically unsaturated dicarboxylic acids, and $C_{4-8}$ ethylenically unsaturated epoxides, provided that component D) does not form more than 20 weight % of the non-polyamide phase.

The polyamides invention may be any commercially available polyamide (commonly called nylon). The polyamide may be a polymer of one or more $C_{4-8}$ lactams, a copolymer of one or more $C_{4-12}$ alkyl diamides copolymerized with one or more $C_{4-12}$ saturated dicarboxylic acids or a polymer of one or more $C_{4-12}$ amino-carboxylic acids. One $C_{4-8}$ lactam is caprolactam which when polymerized gives rise to nylon 6. One $C_{4-12}$ alkane diamides is hexamethylene amine. One $C_{4-12}$ saturated dicarboxylic acid is adipic acid. The copolymerization of these latter two compounds gives rise to nylon 66. One $C_{4-12}$ amino-carboxylic acid is omega-aminoundecanoic acid which when homopolymerized gives rise to nylon 11.

In accordance with the present invention the polyamide may form a continuous phase throughout which are distributed the other phases. The other phases may have a particular size distribution so that the particles have a size from 0.5 to 3, preferably from 0.5 to 1.5 microns. The particles may have a size distribution so that at least 66% preferably more than about 75%, most preferably more than 85% of the particles have a diameter within the above noted ranges.

The alloys of the present invention may comprise a graft copolymer in an amount from 1-25, preferably 3-20 weight % of the alloy. The graft copolymer may comprise from 50 to 99, preferably from 60 to 80 weight % of a rubbery co- or homopolymer substrate comprising from 99.5 to 90 weight % of one or more $C_{4-12}$ alkyl or hydroxy alkyl acrylates or one or more $C_{4-6}$ conjugated diolefins and from 0.5 to 10 preferably from 0.5 to 5 weight % of a crosslinking agent. Most preferably the rubbery phase is a co- or homopolymer of one or more $C_{4-12}$ preferably, $C_{4-8}$ alkyl or hydroxy alkyl acrylates. The rubbery phase may have a Tg of less than 0, more preferably less than -20°C, most preferably less than -40°C. Most preferably the rubbery polymer is a homopolymer of butyl acrylate or a homopolymer of butadiene or isoprene.

The crosslinking agent may be an allyl or glycidyl ester of a $C_{3-8}$ ethylenically unsaturated carboxylic acid or anhydride. Some crosslinking agents are allyl acrylate, allyl methacrylate, glycidyl acrylate or glycidyl methacrylate.

The acrylate monomer may be a so-called soft monomer that is one which upon homopolymerization yields a rubbery polymer having a Tg less than 0°C. Some soft acrylic monomers are butyl acrylate, hexyl acrylate, ethylhexyl acrylate.

In the acrylate there may be grafted to the rubbery phase from 1-50, preferably from 40 to 20 weight % of a polymer comprising from 50 to 90, preferably from 50 to 70 weight % of one or more monomers selected from $C_{1-2}$ alkyl methacrylates and acrylates, $C_{3-12}$ vinyl aromatic monomers which are unsubstituted or substituted by a $C_{1-4}$ alkyl radical and $C_{3-8}$ alkenyl nitriles, from 0 to 30, preferably from 0-15 weight % of one or more $C_{4-12}$, preferably $C_{4-8}$ alkyl acrylates, and from 0.5 to 10 preferably from 0.5 to 5 weight % of one or more $C_{3-6}$ ethylenically unsaturated carboxylic acids.

Preferably the polymer grafted to the rubbery phase has a Tg of greater than 30 most preferably greater than 40°C. Some $C_{1-4}$ alkyl acrylates or methacrylates are methyl methacrylate, ethyl methacrylate, methyl acrylate, ethyl acrylate and a mixture thereof. Some $C_{3-12}$ vinyl aromatic monomers are styrene and $\alpha$-methyl styrene. Some $C_{3-6}$ alkenyl nitriles are acrylonitrile and methacrylonitrile. Some $C_{3-8}$ ethylenically unsaturated carboxylic acids are acrylic acid, methacrylic acid, itaconic acid and fumaric acid. As noted-above, the polymer grafted to the rubbery polymer may contain from 0 up to 30 preferably from 0 up to 15 weight % of one or more soft acrylate monomers. The soft acrylate monomers have been discussed above.

Preferably the acrylate polymer is a core/shell type polymer. That is the rubbery polymer may form a soft core and the subsequent polymer grafted to the rubbery forms a hard outer shell.

The second dispersed component (e.g. component C) in the nylon alloy may be a block copolymer, a copolymer comprising ethylene, at least one $\alpha$-olefin and optionally a non-conjugated diolefin, a styrene butadiene type polymer, or a rubbery acrylate.

The block copolymer may comprise from 90 to 60 weight % of one or more $C_{4-6}$ conjugated diolefins and from 10 to 40 weight % of one or more $C_{8-12}$ vinyl aromatic monomers which are unsubstituted or substituted by a $C_{1-4}$ alkyl radical. The block copolymer may be hydrogenated to at least 90 preferably at least 95 weight %. Some conjugated diolefins are butadiene and isoprene. Some vinyl aromatic monomers are styrene, a $\alpha$-methyl styrene and t-butyl styrene. These polymers are sometimes known as the styrene-ethylene-butadiene-styrene polymers or the so-called SEBS polymers. These polymers are commercially available under the trademark KRATON.

The copolymer may comprise ethylene, at least one $\alpha$-olefin and optionally, from 0 to 15, preferably from 0 to 10, weight % of a non-conjugated diene. The ethylene and $\alpha$-olefin may be used in amounts from 40 to 80, e.g. 40 to 60 weight % and 60 to 20, e.g. 60 to 40 weight % respectively, provided that the total composition does not exceed 100 weight %. If a third non-conjugated diene monomer is present it may be present in amounts from 0 up to 15, preferably not more than 10 weight %. Some $\alpha$-olefins are propylene and 1-butene. Some non-conjugated diene monomers, if used, are 5-ethylidene 2-norbornene (ENB) and dicyclopentadiene 1,4-hexadiene or hexamethylene diene.

The polymer may comprise a styrene-butadiene type polymer (SBR). Such polymers may comprise from about 20 to 80, preferably from 40 to 70 weight % of one or more $C_{8-12}$ vinyl aromatic monomers which are unsubstituted or substituted by a $C_{1-4}$ alkyl radical or a chlorine atom and from 80 to 20, preferably from 60 to 30 weight % of one or more $C_{4-6}$ conjugated diolefins. Some vinyl aromatic monomers and conjugated diolefins monomers have been discussed above.

The polymer may comprise a rubbery acrylate. Rubbery acrylates may comprise random, graft or core/shell co- or homopolymers of one or more $C_{4-8}$ alkyl or hydroalkyl esters of $C_{3-6}$ ethylenically unsaturated carboxylic acids, which esters form homopolymers having a Tg of less than -20, preferably less than -35°C. Preferably such esters are esters of acrylic or methacrylic acid.

The second dispersed component in the nylon matrix may be present in an amount from 1 to 25 preferably from 5 to 20 weight %.

The third dispersed component in the nylon matrix (e.g component D) may comprise a block copolymer of an ethylene polymer similar to that as the second dispersed component in the nylon matrix except that the polymer is functionalized. That is in addition to the conjugated diolefin and vinyl aromatic monomer the polymer may contain from 0.5 to 5, preferably from 0.5 to 3 weight % of one or more $C_{3-8}$ ethylenically unsaturated carboxylic acids; anhydrides of $C_{4-8}$ ethylenically unsaturated dicarboxylic acids; imides of $C_{4-8}$ ethylenically unsaturated dicarboxylic acids and $C_{4-8}$ ethylenically unsaturated epoxides. A preferred anhydride is maleic anhydride and a preferred imide is malimide. The functional component may be polymerized into the polymer backbone or, in the case of an anhydride of a dicarboxylic acid, grafted onto the polymer backbone. Some vinyl aromatic compounds, conjugated diolefins, $\alpha$-olefins and non-conjugated diolefins have been discussed above in describing the second dispersed phase (e.g. component c). The third dispersed component may be present in a amount from 1 to 7 preferably 3 to 6 weight % with the proviso that the component does not form more than 20 weight % of the non-polyamide (e.g. dispersed) phase.

It should be noted that the impact properties of the alloy will depend on the total rubber content of the alloy. The low temperature properties of the alloy will not only depend on the total rubber content of the alloy but also on the Tg of the rubbery components in the alloy. Thus if an alloy is desired which has improved low temperature (e.g. below -20°C) impact it is desirable to increase the amount of rubbery polymer in the alloy having a Tg below -20 preferably below -40°C. Thus in these situations it may be preferable to use rubbery polymers which are hydrogenated block polymers.

The alloys of the present invention may be prepared by melt blending the individual components. Preferably the components are dried before mixing. Suitable drying times and temperatures for nylons are well known to those skilled in the art. Typically the nylon will be dried at a temperature from about 60 top 120°C for times from about 1 to 6 hours. Generally, the acrylate and the other dispersed phases do not need drying before mixing.

The components may be uniformly dry blended such as by using a tumble blender. The dry blend is then fed to an extruder. Alternately, the nylon and the two block copolymers (components C and D) may be dry blended and fed to an extruder and the acrylate may be added to the extruder as a separate later feed. The extruder may be a twin or a single screw extruder. The screw configuration of the extruder is selected to obtain good mixing. It is preferable to have a fairly high shear to obtain the smaller size particle distribution which may be used in accordance with the present invention. However, there are a number of other factors which affect particle size distribution including the relative viscosities of the phases and the interfacial tension. The extruder may be operated at temperatures from 190 to 290 preferably from 200 to 250°C and at from 50 to 200, preferably from 80 to 180, most preferably from 100 to 140 RPM's. The specific operating conditions for a particular extruder and screw configuration may be determined by non-inventive routine experimentation.

The blend is melted in the extruder and leaves the extruder as strands of alloy melt. The melt is cooled typically by air or water and then is chopped to pellets.

Conventional additives may be added to the blend such as one or more heat and light stabilizers, antioxidants, flame and smoke retardants, nucleating agents, processing aids and mold release aids. Typically these additives are used in relatively small amounts. The total of such additives may be less than 25, more preferably less than 15 weight %. The selection of any particular agent is not considered a part of this invention as it is considered part of good manufacturing practice and non-inventive.

Reinforcing agents may be used in conjunction with the blends of the present invention. The reinforcing agents may be fibers such as metal fibers or organic fibers. Metal fibers may be steel, aluminum and boron fibers. Organic fibers may be aramid fibers (such as KEVLAR (trademark)) and carbon fibers. The fibers may be inorganic non-metallic fibers such as glass fibers. The fibers may be used in amounts up to 50 weight % more preferably from 15 to 40 weight %.

The present invention will now be illustrated by the following examples which are not intended to limit the invention. In the examples, unless otherwise specified, parts means parts by weight (e.g. grams) and percent means weight percent.

## EXAMPLE 1

A dry blend of polymers was prepared. The ingredients were as follows:
(1) nylon 6 - 79 parts;
(2) a core/shell acrylate having a rubbery core and a hard shell containing a small amount (less than 5 weight % based on the shell) of carboxylation, (sold under the trademark PARALOID EXL 3386) - 6 parts;
(3) an hydrogenated styrene butadiene block copolymer (sold under the trademark KRATON G 1651) - 11.0 parts; and
(4) an hydrogenated maleated styrene butadiene block copolymer (sold under the trademark KRATON FG 1901X) - 4 parts.

A second blend was prepared comprising:
(1) nylon 66 - 79 parts;
(2) PARALOID EXL 3387 - 6 parts;
(3) KRATON G 1657 - 11 parts; and
(4) KRATON FG 1901 X - 4 parts.
PARALOID EXL 3387 is a carboxylate core/shell acrylate.

KRATON G 1657 is a hydrogenated block copolymer of styrene and butadiene. KRATON FG 1901X has been identified above.

In preparing the blends the nylon was thoroughly dried. Then the polymers were mixed in a tumble blender to ensure uniform mixing. The dry blend was then passed through a Leistritz co-rotating twin screw extruder having 6 temperature zones and a die at about 120 RPM's. The temperature zones were heated within the following ranges: zone 1, 210-250°C; zone 2, 210-250°C; zone 3, 220-270°C; zone 4, 220-270°C; zone 5, 220-270°C; zone 6, 220-270°C; and the die temperature was from 230 to 270°C. The resulting extrudate was then cooled and chopped into pellets. The resulting pellets were then injection molded into test bars and were tested. The molding machine was a 40 tone ENGEL machine. The molding conditions were: zone 1, 450-530°F; zone 2, 480-535°F; zone 3, 480-550°F; mold temperature 140-190°F; and injection pressure (gage) 700-1600 psig. For comparison purposes a sample of ZYTEL (trademark) ST-801 a super tough nylon was also injection molded under the same conditions into test bars. The bars were then subjected to the following tests:

IZOD impact (notched) ASTM D-256;
Tensile yield strength ASTM D-638;
Elongation ASTM D-638;
Tensile modulus ASTM D-638; and
Flexural modulus ASTM D-790.
The tests results are set forth in Table 1.

5

TABLE 1

| Test/Sample | First Blend | Second Blend | ZYTEL ST-801 |
|---|---|---|---|
| IZOD ft-lb/in | 28 | 19 | 16 |
| Tensile yield psi | 7270 | 7487 | 6930 |
| Elongation % | 213 | 52 | 67 |
| Tensile Modulus psi x 10³ | 298 | 282 | 258 |
| Flexural Modulus psi x 10³ | 250 | 267 | 249 |

These results show that the alloys of the present invention have an excellent balance of properties and that they have better toughness than the commercially available "super tough" nylons.

In the present application's disclosure of the present invention, any numerical value includes the precise value and any value "about" or "essentially" or "substantially" the same as the precise value. The wording of the appended claims and abstract is incorporated into the present description. The words "essential" and "essentially" may be precise values or values substantially the same as precise values, etc.

## Claims

1. A polymer alloy characterised by comprising:

A) from 65 to 95 weight % of one or more polyamides;

B) from 1 to 25 weight % of one or more graft copolymers comprising from 50 to 99 weight % of a rubbery substrate comprising:

i) 50-99.5 weight % of one or more monomers selected from $C_{4-12}$ alkyl or hydroxy alkyl acrylates and $C_{4-6}$ conjugated diolefins;

ii) from 0-40 weight % of one or more $C_{8-12}$ vinyl aromatic monomers which are unsubstituted or substituted by a $C_{1-4}$ alkyl radical; and

iii) from 0.5 to 10 weight % of one or more allyl or glycidyl esters of $C_{3-6}$ ethylenically unsaturated carboxylic acids or anhydrides;

said substrate having grafted thereto from 1 to 50 weight % of a co- or homopolymer comprising:

i) from 59.5 to 90 weight % of one or more monomers selected from $C_{1-4}$ alkyl methacrylates, $C_{8-12}$ vinyl aromatic monomers which are unsubstituted or substituted by a $C_{1-4}$ alkyl radical, and $C_{3-6}$ alkenyl nitriles;

ii) from 0 to 30 weight % of one or more $C_{4-12}$ alkyl acrylates; and

iii) from 0.5 to 10 weight % of one or more $C_{3-6}$ ethylenically unsaturated carboxylic acids;

C) from 1 to 25 weight % of one or more polymers selected from

i) block copolymer comprising from 90 to 60 weight % of one or more $C_{4-6}$ conjugated diolefins and from 10 to 40 weight % of one or more $C_{3-12}$ vinyl aromatic monomers which are unsubstituted or substituted by a $C_{1-4}$ alkyl radical, which block copolymer has been hydrogenated to at least 90%;

ii) polymers comprising 40 to 80 weight % of ethylene, 20 to 60 weight % of at least one $\alpha$-$C_{3-8}$ olefin and from 0 to 15 weight % of a non-conjugated $C_{6-12}$ diene; and

iii) polymers comprising from 20 to 80 weight % of one or more $C_{8-12}$ vinyl aromatic monomers which are unsubstituted or substituted by a chlorine atom or a $C_{1-4}$ alkyl radical and from 80 to 20 weight % of one or more $C_{4-6}$ conjugated diolefins;

iv) copolymers of one or more $C_{4-8}$ alkyl or hydroxy alkyl esters of $C_{3-6}$ ethylenically unsaturated carboxylic acids (e.g. of acrylic or methacrylic acid) which esters form homopolymers having a Tg of less than -20°C; and

D) from 1 to 7 weight % of one or more polymers selected from

i) a block copolymer comprising from 89.5 to 55 weight % of one or more $C_{4-6}$ conjugated diolefins,

6

from 10 to 40 weight % of one or more $C_{8-12}$ vinyl aromatic monomers which are unsubstituted or substituted by a $C_{1-4}$ alkyl radical, and from 0.5 to 5 weight % of one or more monomers selected from $C_{3-8}$ ethylenically unsaturated carboxylic acids, anhydrides of $C_{4-8}$ ethylenically unsaturated dicarboxylic acids, imides of $C_{4-8}$ ethylenically unsaturated dicarboxylic acids, and $C_{4-8}$ ethylenically unsaturated epoxides, which block copolymer has been hydrogenated to at least 90%; and
ii) polymers comprising 40 to 80 weight % of ethylene, 40 to 80 weight % of at least one $\alpha$-$C_{3-8}$ olefin, from 0 to 15 weight % of a non-conjugated $C_{6-12}$ diene, and from 0.5 to 5 weight % of one or more monomers selected from $C_{3-8}$ ethylenically unsaturated carboxylic acids, anhydrides of $C_{4-8}$ ethylenically unsaturated dicarboxylic acids, imides of $C_{4-8}$ ethylenically unsaturated dicarboxylic acids, and $C_{4-8}$ ethylenically unsaturated epoxides, provided that component D) does not form more than 20 weight % of the non-polyamide phase.

2. A polymer alloy according to claim 1, wherein component B comprises from 60 to 80 weight % of a rubbery polymer comprising a co or homopolymer of one or more $C_{4-8}$ alkyl or hydroxy alkyl acrylates and 0.5 to 5 weight % of allyl acrylate or methacrylate or glycidyl acrylate or methacrylate, said rubbery polymer having grafted thereto from 40 to 20 weight % of a polymer having a Tg of greater than 30°C comprising from 50 to 70 weight % of one or more monomers selected from $C_{1-2}$ alkyl acrylates and methacrylates, $C_{6-8}$ vinyl aromatic monomers which are unsubstituted or substituted by a $C_{1-4}$ alkyl radical, and $C_{3-5}$ alkenyl nitriles; 0 to 15 weight % or one or more $C_{4-8}$ alkyl acrylates, and 0.5 to 5 weight % of one or more $C_{3-6}$ ethylenically unsaturated carboxylic acids.

3. A polymer alloy according to claim 2, wherein said component B comprises 60 to 80 weight % of a polymer of butyl acrylate and from 0.5 to 5 weight % of one or more monomers selected from allyl acrylate, allyl methacrylate, glycidyl acrylate, and glycidyl methacrylate, to which is grafted from 40 to 20 weight % of a polymer having a Tg of greater than 40°C comprising: from 50 to 90 weight % of one or more monomers selected from methyl methacrylate, ethyl methacrylate, methyl acrylate, ethyl acrylate, styrene, and $\alpha$-methyl styrene; from 0 to 15 weight % of one or more monomers selected from butyl acrylate, hexyl acrylate, and ethylhexyl acrylate; 0.5 to 5 weight % of one or more monomers selected from the group consisting of acrylic acid, methacrylic acid, itaconic acid, and fumaric acid.

4. A polymer alloy according to claim 3, wherein component B is a core/shell polymer having a rubbery core and a shell which is a polymer having a Tg greater than 40°C.

5. A polymer alloy according to claim 4, wherein component B is present in an amount from 5 to 20 weight %.

6. A polymer alloy according to claim 5, wherein component C comprises a block copolymer of 10 to 40 weight % of styrene and 90 to 60 weight % of butadiene, which block copolymer has been hydrogenated to at least 95%.

7. A polymer alloy according to claim 6, wherein component C is present in an amount from about 10 to 20 weight %.

8. A polymer alloy according to claim 7, wherein component D comprises a block copolymer of from 10 to 40 weight % styrene, from 89.5 to 58 weight % of butadiene and from 0.5 to 3 weight % of maleic anhydride which copolymer has been hydrogenated to at least 95%.

9. A polymer alloy according to claim 8, wherein component D is present in an amount from 3 to 6 weight %.

10. A polymer alloy according to claim 9, wherein said polyamide is selected from polymers of $C_{4-8}$ lactams, copolymers of one or more $C_{4-8}$ alkane diamines copolymerized with one or more $C_{4-12}$ saturated dicarboxylic acids or a polymer of one or more $C_{4-12}$ amino-carboxylic acids.

11. A polymer alloy according to claim 10, wherein said polyamide is selected from homopolymers of caprolactam, copolymers of hexamethylene diamine and adipic acid, and a homopolymer of omega-aminoundecanoic acid.

12. A polymer alloy according to claim 11, wherein components B, C, and D are distributed throughout a continuous polyamide phase.

13. A polymer alloy according to claim 12, wherein components B, C, and D have a particle size distribution from about 0.5 to 3 microns.

14. A polymer alloy according to claim 13, wherein components B, C, and D have a particle size distribution from 0.5 to 1.5 microns.

15. A polymer alloy characterised by comprising a nylon phase and a rubbery phase comprising a core/shell carboxylated acrylate, a block copolymer of styrene-butadiene-styrene and less than 20% of the rubber phase of a maleated block copolymer of styrene-butadiene-styrene.

European Patent
Office

**EUROPEAN SEARCH REPORT**

Application Number

| | DOCUMENTS CONSIDERED TO BE RELEVANT | | EP 91308967.8 |
|---|---|---|---|
| Category | Citation of document with indication, where appropriate, of relevant passages | Relevant to claim | CLASSIFICATION OF THE APPLICATION (Int. Cl.5) |
| P,X | <u>EP - A - 0 402 528</u><br>(MONSANTO KASEI COMPANY)<br>    * Page 3, line 12 - page 5,<br>      line 39; examples; claims *<br>                 -- | 1,4,<br>10-13 | C 08 L 77/00<br>//(C 08 L 77/00<br>  C 08 L 51:04<br>  C 08 L 51:06<br>  C 08 L 53:00 |
| X | <u>EP - A - 0 375 389</u><br>(FERRO CORPORATION)<br>    * Page 3, line 56 - page 7,<br>      line 1; examples; claims *<br>                 -- | 1-4,<br>10-13 | C 08 L 53:02) |
| A | <u>EP - A - 0 304 039</u><br>(NIPPON PETROCHEMICALS<br>COMPANY LIMITED)<br>    * Examples; claims *<br>                 -- | 1-13 | |
| A | <u>EP - A - 0 278 500</u><br>(SUMITOMO NAUGATUCK CO LTD.)<br>    * Examples; claims *<br>                 ---- | 1-13 | |
| | | | **TECHNICAL FIELDS<br>SEARCHED (Int. Cl.5)**<br><br>C 08 L 77/00<br>C 08 L 51/00<br>C 08 L 53/00 |

The present search report has been drawn up for all claims

| Place of search | Date of completion of the search | Examiner |
|---|---|---|
| VIENNA | 07-01-1992 | TENGLER |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P0401)